# EUROPEAN PATENT APPLICATION

(11) **EP 3 342 510 A1**
(43) Date of publication of application: **04.07.2018**
(21) Application number: 16839376.7
(22) Date of filing: 26.08.2016
(51) Int. Cl.: B22F 9/20, B01J 23/42, B01J 23/89, B01J 35/02, B22F 1/00, H01J 37/20

(54) **METHOD FOR MANUFACTURING METAL NANOPARTICLES, METHOD FOR MANUFACTURING METAL NANOPARTICLE CARRIER, AND METAL NANOPARTICLE CARRIER**

(30) Priority: 27.08.2015 JP 2015167723
(71) Applicant: Osaka University, Suita-shi, Osaka 565-0871 (JP)
(72) Inventor: TSUDA Tetsuya, Suita-shi Osaka 565-0871 (JP); KUWABATA Susumu, Suita-shi Osaka 565-0871 (JP); SAKAMOTO Tsuyoshi, Suita-shi Osaka 565-0871 (JP)
(74) Representative: Plougmann Vingtoft a/s
(86) International application number: PCT/JP2016/075061
(87) International publication number: WO 2017/034029

(57) **Abstract**

A method for manufacturing metal nanoparticles includes a step (S1) of adding at least one metal salt to an ionic liquid to form metal ions in the ionic liquid, and a step (S2) of heating the ionic liquid to which the metal salt has been added to thermally reduce the metal ions.

## Description

### [TECHNICAL FIELD]

The present invention relates to a method for manufacturing metal nanoparticles, a method for manufacturing a metal nanoparticle-loaded carrier, and a metal nanoparticle-loaded carrier.

### [BACKGROUND ART]

An electrode catalyst is used for an energy device such as a fuel cell and an air cell. In general, the electrode catalyst is produced by preparing metal nanoparticles such as platinum nanoparticles and supporting (fixing) the metal nanoparticles on a support such as a carbon support.

In the past, the inventors of the present invention proposed a method for manufacturing metal nanoparticles using an ionic liquid. Specifically, a method for manufacturing metal nanoparticles by scattering atoms or molecules forming a precursor of the metal nanoparticles through sputtering and attaching the atoms or molecules to an ionic liquid has been proposed (Patent Literature 1). Also, a method for manufacturing metal nanoparticles by scattering atoms or molecules through laser ablation and capturing the atoms or molecules with an ionic liquid has been proposed (Patent Literature 2).

### [CITATION LIST]

### [Patent Literature]

[Patent Literature 1] Japanese Patent Application Laid-Open Publication No. 2007-231306
[Patent Literature 2] Japanese Patent Application Laid-Open Publication No. 2015-117395

### [SUMMARY OF INVENTION]

### [Technical Problem]

The inventors of the present invention have continued study into methods for manufacturing metal nanoparticles. Furthermore, the inventors of the present invention extensively studied methods for manufacturing metal nanoparticle-loaded carriers that support metal nanoparticles. As a result, a novel method for manufacturing metal nanoparticles has been completed. Also, a novel method for manufacturing a metal nanoparticle-loaded carrier has been completed by applying the method for manufacturing metal nanoparticles.

### [Solution to Problem]

A method for manufacturing metal nanoparticles according to the present invention includes adding at least one metal salt to an ionic liquid to form metal ions in the ionic liquid, and heating the ionic liquid to which the metal salt has been added to thermally reduce the metal ions.

In an embodiment, the metal salt includes a group 10 element.

In an embodiment, at least two metal salts are added to the ionic liquid to manufacture alloy nanoparticles as the metal nanoparticles.

A method for manufacturing a metal nanoparticle-loaded carrier according to the present invention includes adding a support material and at least one metal salt to an ionic liquid to form metal ions in the ionic liquid, and heating the ionic liquid to which the support material and the metal salt have been added to thermally reduce the metal ions.

In an embodiment, the metal salt includes a group 10 element.

In an embodiment, at least two metal salts are added to the ionic liquid, and the metal nanoparticles include alloy nanoparticles.

In an embodiment, the support material is a carbon material.

In an embodiment, the metal nanoparticles are supported in a single layer on the support.

A metal nanoparticle-loaded carrier according to the present invention includes metal nanoparticles and a support supporting the metal nanoparticles, and the metal nanoparticles are supported in a single layer on the support.

In an embodiment, a density of the metal nanoparticles on the support is at least 50 particles/µm² and at most 200 particles/µm².

In an embodiment, the support material includes a carbon material.

In an embodiment, the metal nanoparticles include a group 10 element.

In an embodiment, the metal nanoparticles include alloy nanoparticles.

In an embodiment, the metal nanoparticles include at least one of platinum nanoparticles, nickel nanoparticles, and platinum-nickel alloy nanoparticles.

In an embodiment, the metal nanoparticle-loaded carrier further includes a solid-like ionic liquid, and the solid-like ionic liquid exists between the metal nanoparticles and the support.

### [Advantageous Effects of Invention]

In a method for manufacturing metal nanoparticles according to the present invention, the metal nanoparticles can be manufactured by one-pot synthesis. In a method for manufacturing a metal nanoparticle-loaded carrier according to the present invention, the manufacture of the metal nanoparticles and the supporting of the metal nanoparticles on a support (support material) are also possible by one-pot synthesis.

### [BRIEF DESCRIPTION OF DRAWINGS]

[FIG. 1]

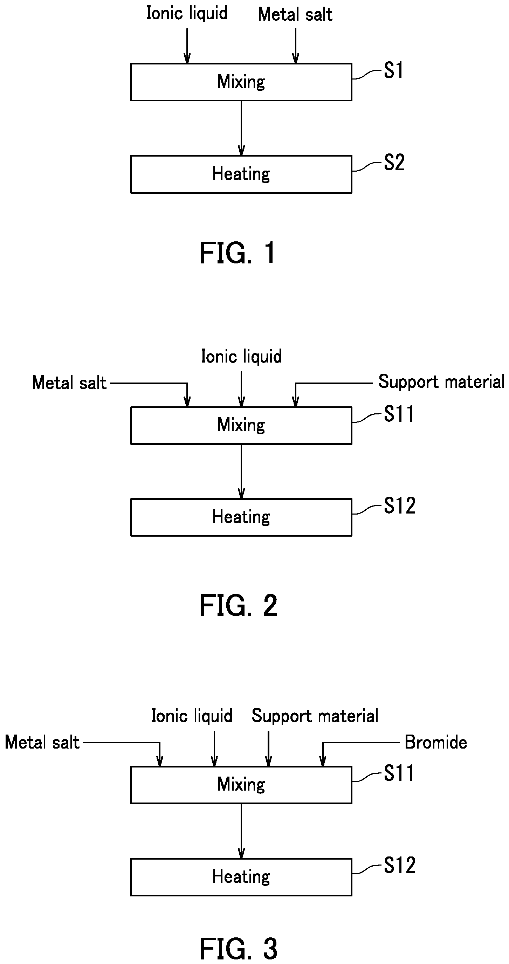

   FIG. 1 is a flowchart illustrating a method for manufacturing metal nanoparticles according to a first embodiment of the present invention.
[FIG. 2]
   FIG. 2 is a flowchart illustrating a method for manufacturing a metal nanoparticle-loaded carrier according to a second embodiment of the present invention.
[FIG. 3]
   FIG. 3 is a flowchart illustrating a method for manufacturing a metal nanoparticle-loaded carrier according to a third embodiment of the present invention.
[FIG. 4]

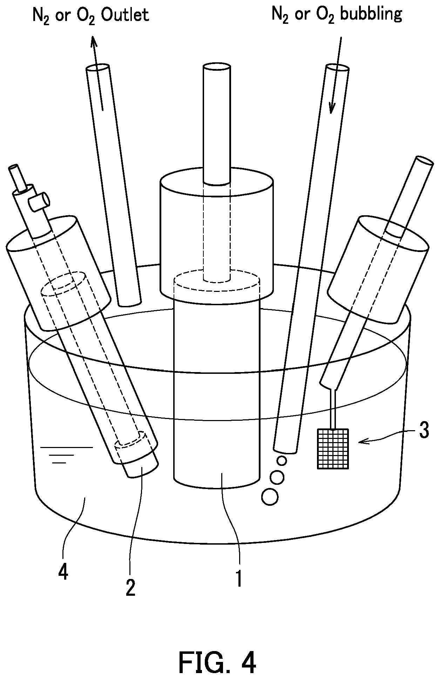

   FIG. 4 is a diagram illustrating an electrochemical cell used in examples of the present invention.
[FIG. 5]
   FIG. 5A is a photograph instead of a drawing showing a transmission electron microscope (TEM) image of Example 1 of the present invention.
   FIG. 5B is a photograph instead of a drawing showing an enlargement of a portion of FIG. 5A.
   FIG. 5C is a diagram illustrating a result of a composition analysis performed on Example 1 using an energy dispersive X-ray (EDX) spectroscope.
   FIG. 5D is a diagram illustrating a particle size distribution of Example 1.
[FIG. 6] FIG. 6A is a photograph instead of a drawing showing a TEM image of Example 2 of the present invention.
   FIG. 6B is a photograph instead of a drawing showing an enlargement of a portion of FIG. 6A.
   FIG. 6C is a diagram illustrating a result of a composition analysis performed on Example 2 using the EDX.
   FIG. 6D is a diagram illustrating a particle size distribution of Example 2.
[FIG. 7]

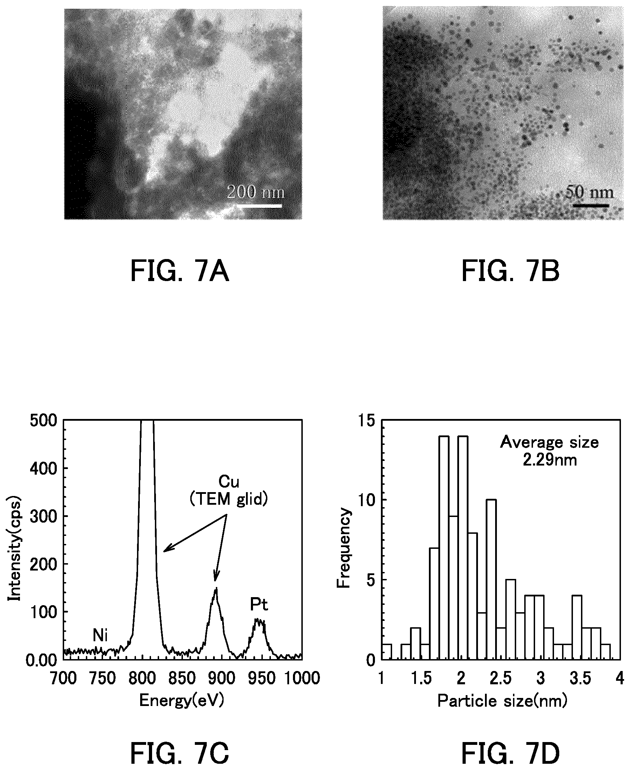

   FIG. 7A is a photograph instead of a drawing showing a TEM image of Example 3 of the present invention.
   FIG. 7B is a photograph instead of a drawing showing an enlargement of a portion of FIG. 7A.
   FIG. 7C is a diagram illustrating a result of a composition analysis performed on Example 3 using the EDX.
   FIG. 7D is a diagram illustrating a particle size distribution of Example 3.
[FIG. 8]

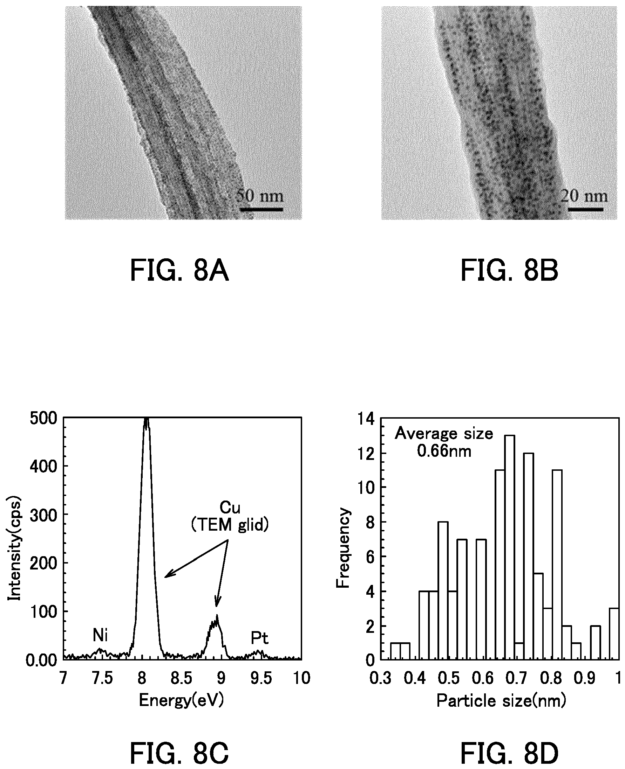

   FIG. 8A is a photograph instead of a drawing showing a TEM image of Example 4 of the present invention.
   FIG. 8B is a photograph instead of a drawing showing an enlargement of a portion of FIG. 8A.
   FIG. 8C is a diagram illustrating a result of a composition analysis performed on Example 4 using the EDX.
   FIG. 8D is a diagram illustrating a particle size distribution of Example 4.
[FIG. 9]

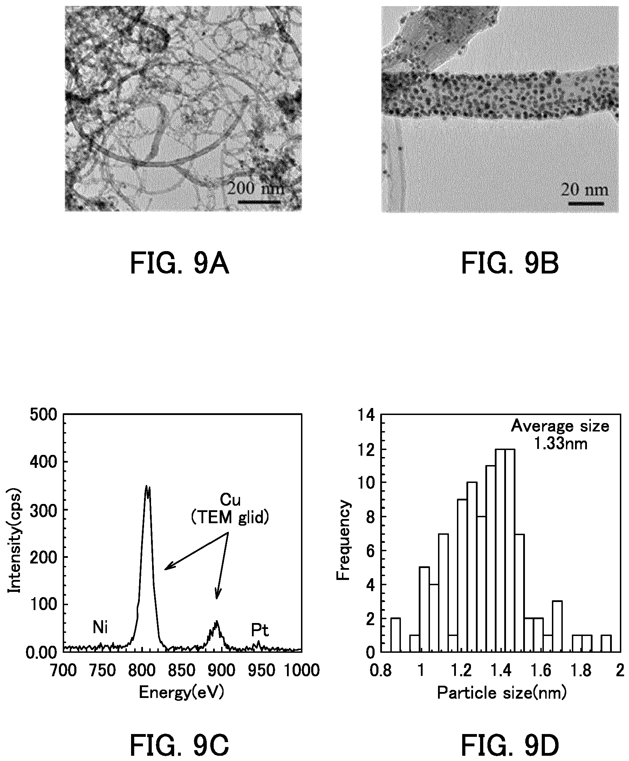

   FIG. 9A is a photograph instead of a drawing showing a TEM image of Example 5 of the present invention.
   FIG. 9B is a photograph instead of a drawing showing an enlargement of a portion of FIG. 9A.
   FIG. 9C is a diagram illustrating a result of a composition analysis performed on Example 5 using the EDX.
   FIG. 9D is a diagram illustrating a particle size distribution of Example 5.
[FIG. 10]

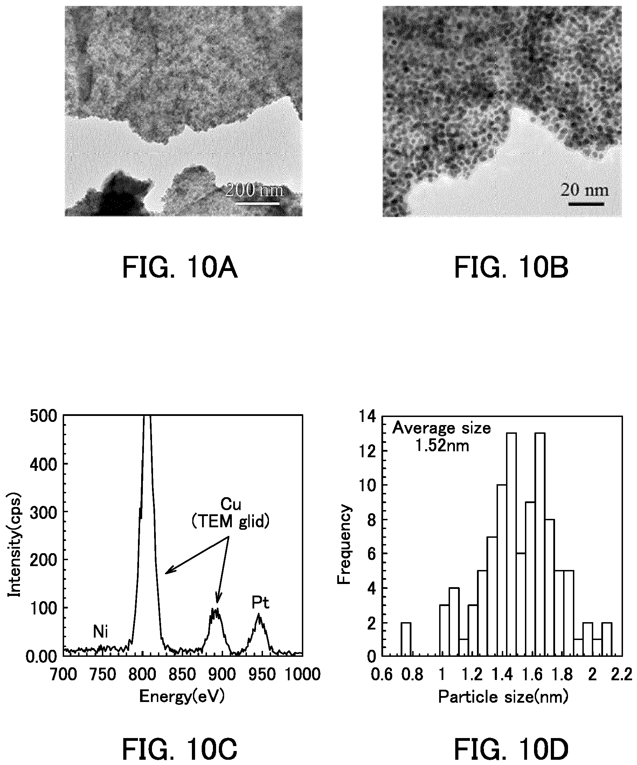

   FIG. 10A is a photograph instead of a drawing showing a TEM image of Example 6 of the present invention.
   FIG. 10B is a photograph instead of a drawing showing an enlargement of a portion of FIG. 10A.
   FIG. 10C is a diagram illustrating a result of a composition analysis performed on Example 6 using the EDX.
   FIG. 10D is a diagram illustrating a particle size distribution of Example 6.
[FIG. 11]

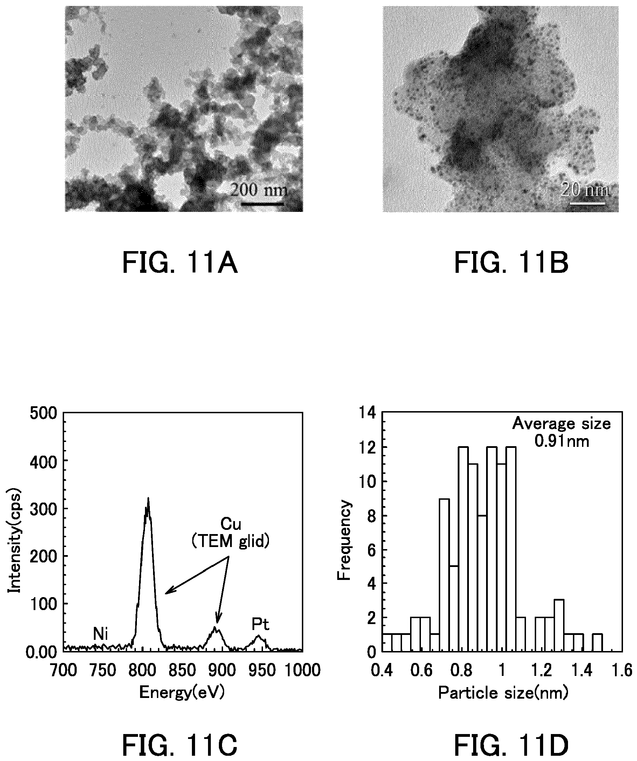

   FIG. 11A is a photograph instead of a drawing showing a TEM image of Example 7 of the present invention.
   FIG. 11B is a photograph instead of a drawing showing an enlargement of a portion of FIG. 11A.
   FIG. 11C is a diagram illustrating a result of a composition analysis performed on Example 7 using the EDX.
   FIG. 11D is a diagram illustrating a particle size distribution of Example 7.
[FIG. 12]

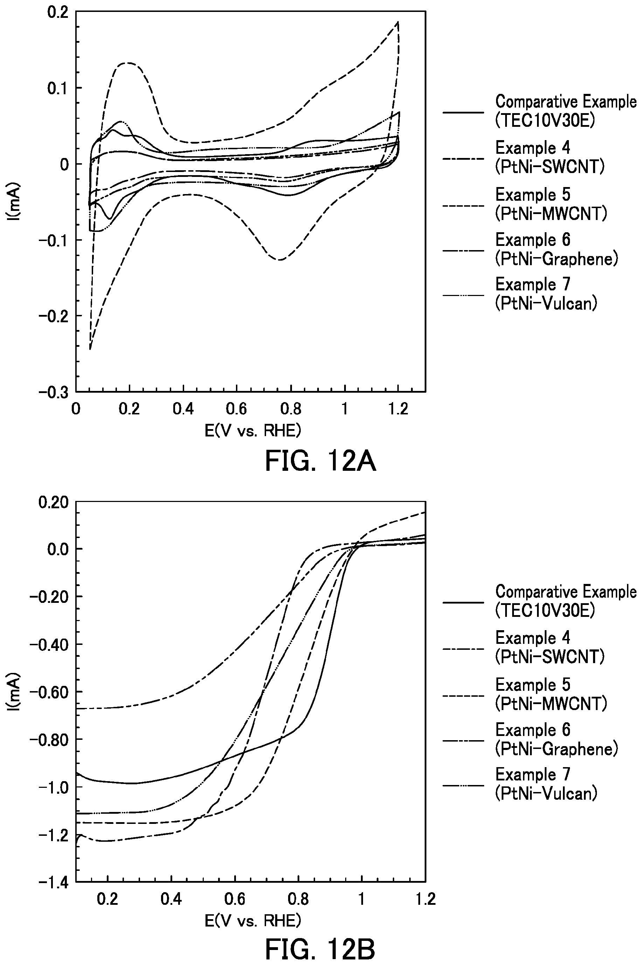

   FIG. 12A is a diagram illustrating results of a cyclic voltammetric analysis performed on metal nanoparticle-loaded carriers of Examples 4 to 7 and Comparative Example.
   FIG. 12B is a diagram illustrating results of a linear sweep voltammetric analysis performed on the metal nanoparticle-loaded carriers of Examples 4 to 7 and Comparative Example.
[FIG. 13]

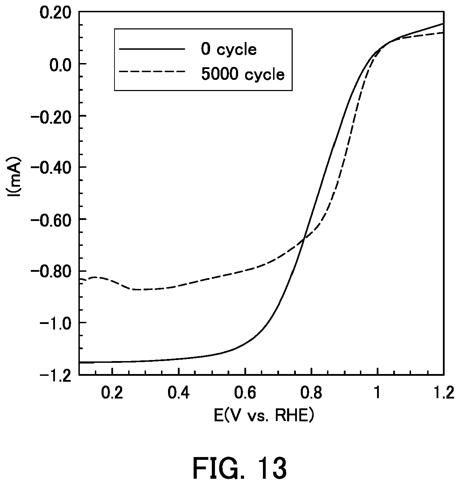

   FIG. 13 is a diagram illustrating a result of a durability test performed on the metal nanoparticle-loaded carrier of Example 5.
[FIG. 14]

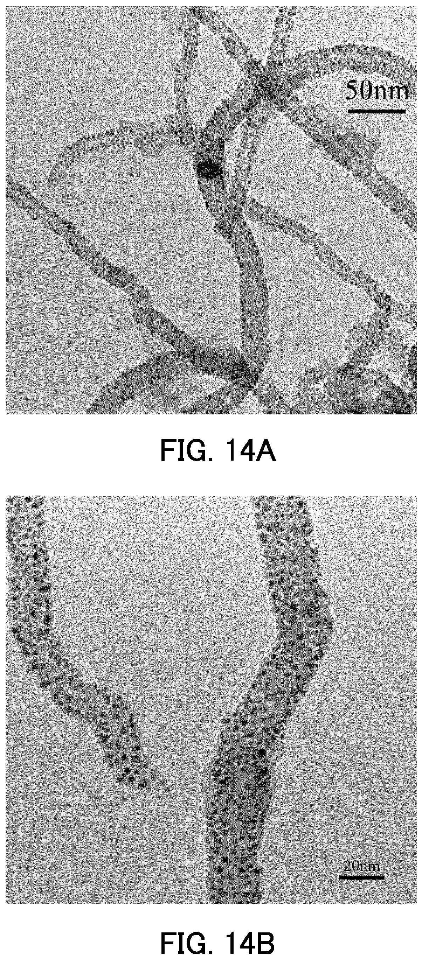

   FIG. 14A is a photograph instead of a drawing showing a TEM image of Example 8 of the present invention.
   FIG. 14B is a photograph instead of a drawing showing an enlargement of a portion of FIG. 14A.
[FIG. 15]

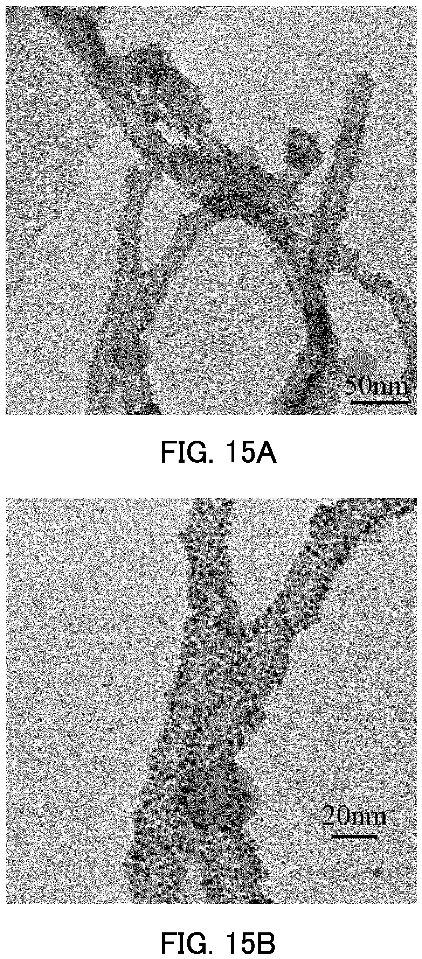

   FIG. 15A is a photograph instead of a drawing showing a TEM image of Example 9 of the present invention.
   FIG. 15B is a photograph instead of a drawing showing an enlargement of a portion of FIG. 15A.
[FIG. 16]

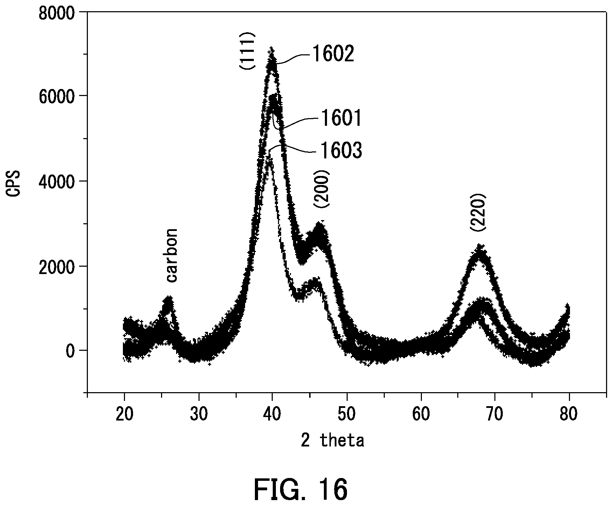

   FIG. 16 is a diagram illustrating results of X-ray diffraction performed on metal nanoparticle-loaded carriers of Examples 8 and 9, and Comparative Example.
[FIG. 17]

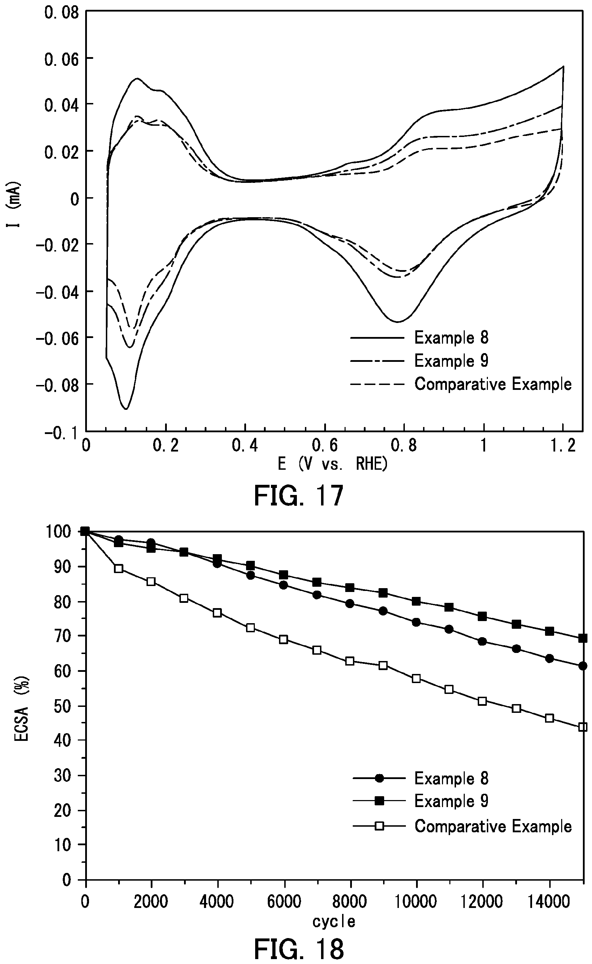

   FIG. 17 is a diagram illustrating results of a cyclic voltemmetric analysis performed on the metal nanoparticle-loaded carriers of Examples 8 and 9, and Comparative Example.
[FIG. 18]
   FIG. 18 is a diagram illustrating results of an electrochemical surface area measurement performed on the metal nanoparticles of Examples 8 and 9, and Comparative Example.
[FIG. 19]

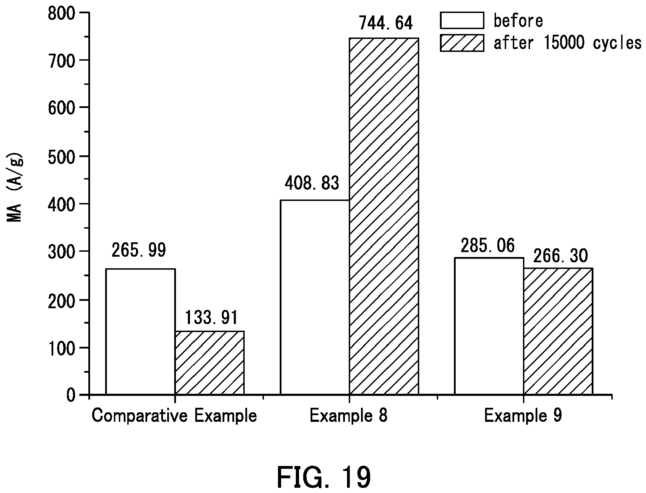

   FIG. 19 is a diagram illustrating results of a mass activity measurement performed on the metal nanoparticles of Examples 8 and 9, and Comparative Example.
[FIG. 20]

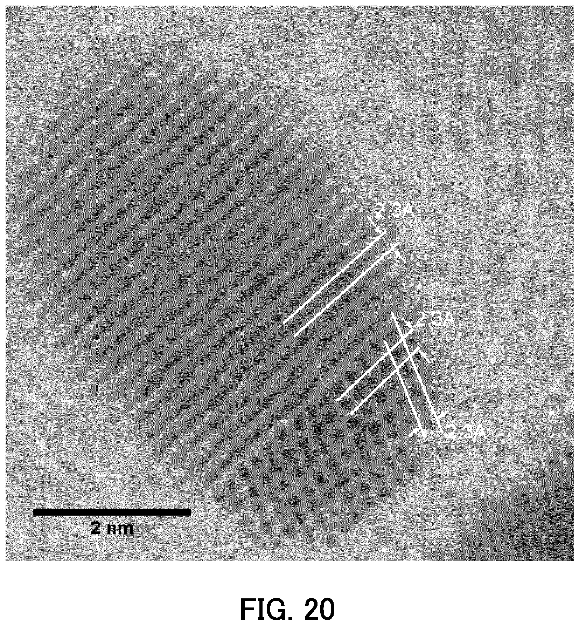

   FIG. 20 is a photograph instead of a drawing showing a scanning transmission electron microscope (STEM) image of the metal nanoparticle-loaded carrier of Example 8 before an oxidation-reduction reaction was performed.
[FIG. 21]

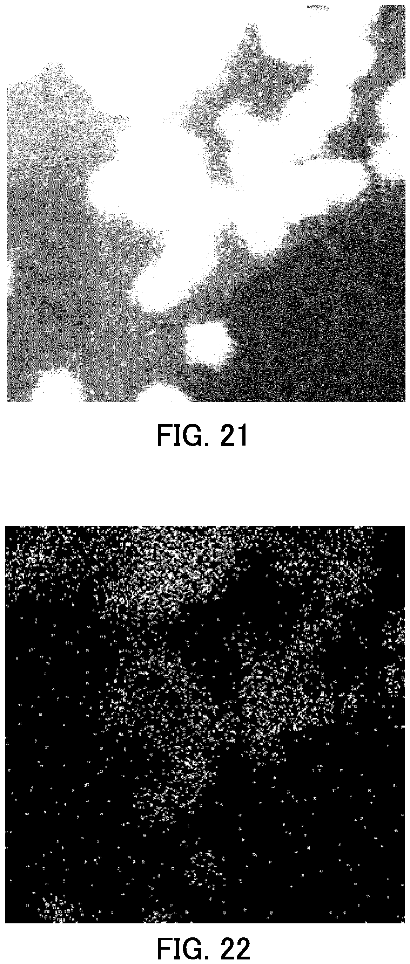

   FIG. 21 is a photograph instead of a drawing showing a dark field image of the metal nanoparticle-loaded carrier of Example 8 before the oxidation-reduction reaction was performed.
[FIG. 22]
   FIG. 22 is a photograph instead of a drawing showing a distribution image of platinum (Pt) included in the metal nanoparticle-loaded carrier of Example 8 before the oxidation-reduction reaction was performed.
[FIG. 23]

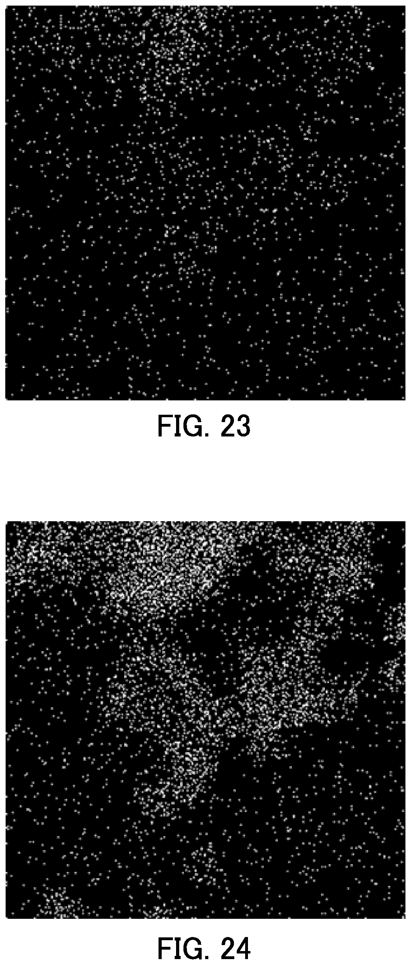

   FIG. 23 is a photograph instead of a drawing showing a distribution image of nickel (Ni) included in the metal nanoparticle-loaded carrier of Example 8 before the oxidation-reduction reaction was performed.
[FIG. 24]
   FIG. 24 is a photograph instead of a drawing showing the distribution images shown in FIGS. 22 and 23 superimposed upon each other.
[FIG. 25]

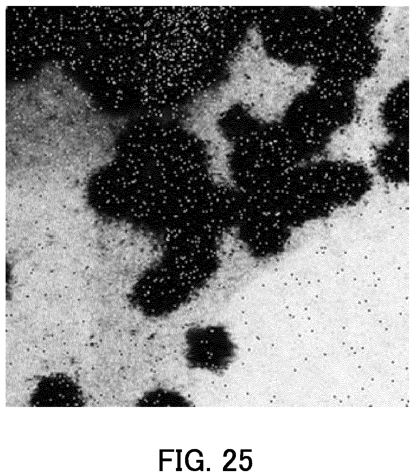

   FIG. 25 is a photograph instead of a drawing showing the distribution image shown in FIG. 24 superimposed upon a TEM image of the metal nanoparticle-loaded carrier of Example 8 before the oxidation-reduction reaction was performed.
[FIG. 26]

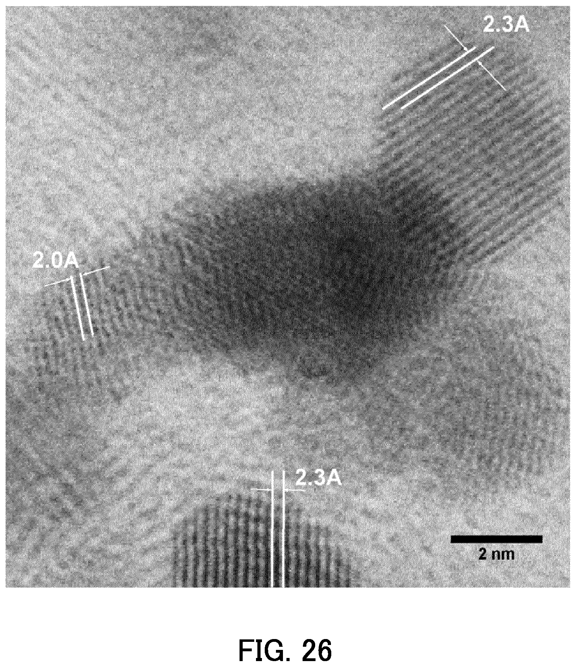

   FIG. 26 is a photograph instead of a drawing showing an STEM image of the metal nanoparticle-loaded carrier of Example 8 after the oxidation-reduction reaction was performed.
[FIG. 27]

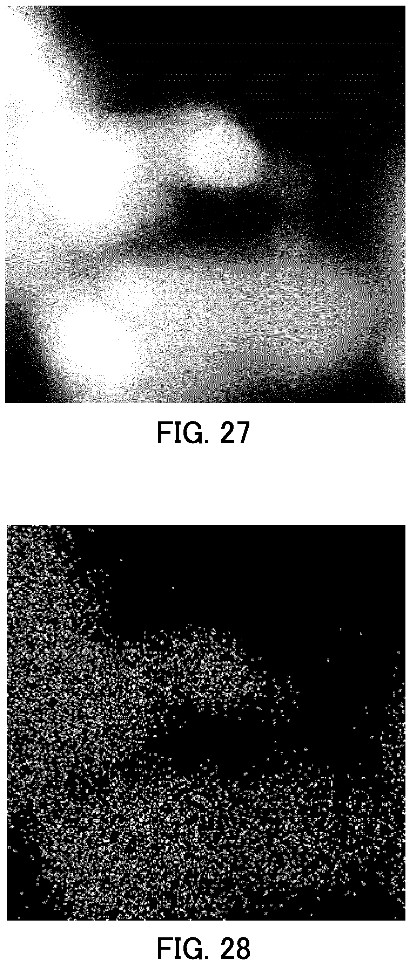

   FIG. 27 is a photograph instead of a drawing showing a dark field image of the metal nanoparticle-loaded carrier of Example 8 after the oxidation-reduction reaction was performed.
[FIG. 28]
   FIG. 28 is a photograph instead of a drawing showing a distribution image of the platinum included in the metal nanoparticle-loaded carrier of Example 8 after the oxidation-reduction reaction was performed.
[FIG. 29]

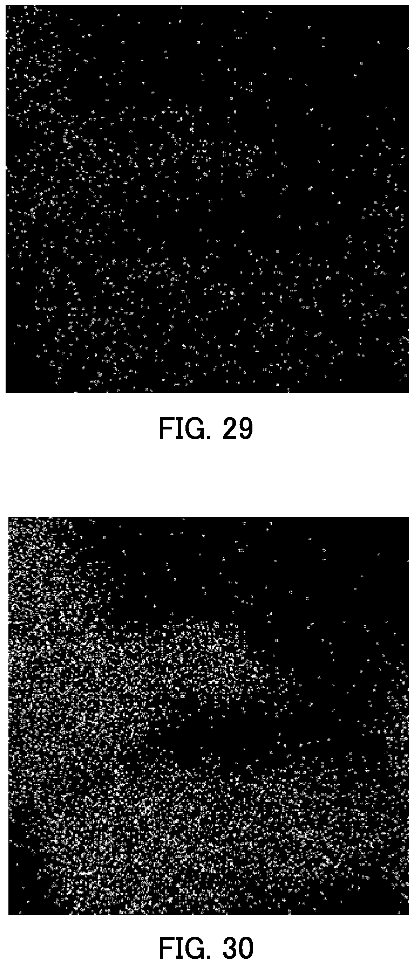

   FIG. 29 is a photograph instead of a drawing showing a distribution image of the nickel included in the metal nanoparticle-loaded carrier of Example 8 after the oxidation-reduction reaction was performed.
[FIG. 30]
   FIG. 30 is a photograph instead of a drawing showing the distribution images shown in FIGS. 28 and 29 superimposed upon each other.
[FIG. 31]

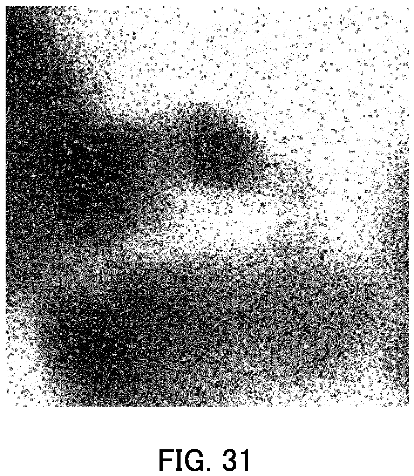

   FIG. 31 is a photograph instead of a drawing showing the distribution image shown in FIG. 30 superimposed upon a TEM image of the metal nanoparticle-loaded carrier of Example 8 after the oxidation-reduction reaction was performed.
[FIG. 32]

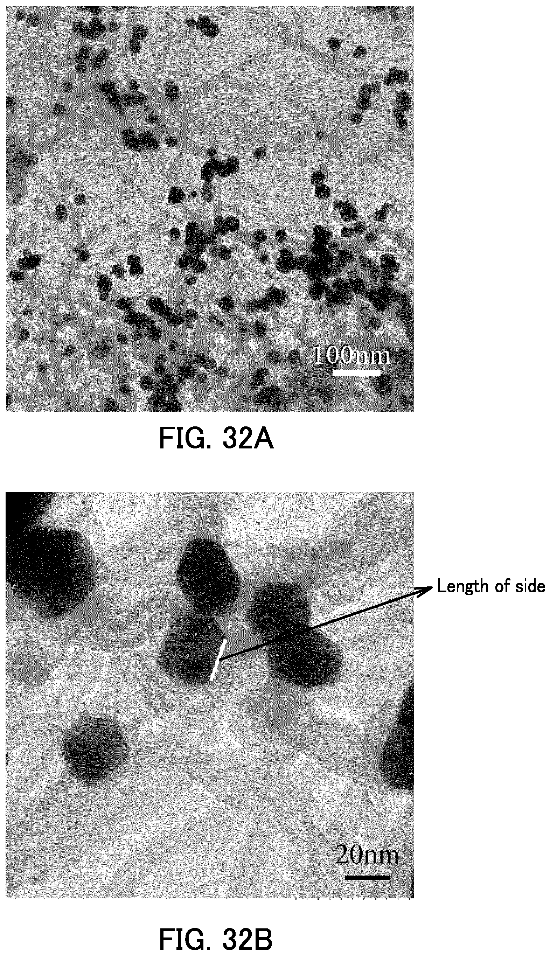

   FIG. 32A is a photograph instead of a drawing showing a TEM image of Example 10 of the present invention.
FIG. 32B is a photograph instead of a drawing showing an enlargement of a portion of FIG. 32A.
[FIG. 33]

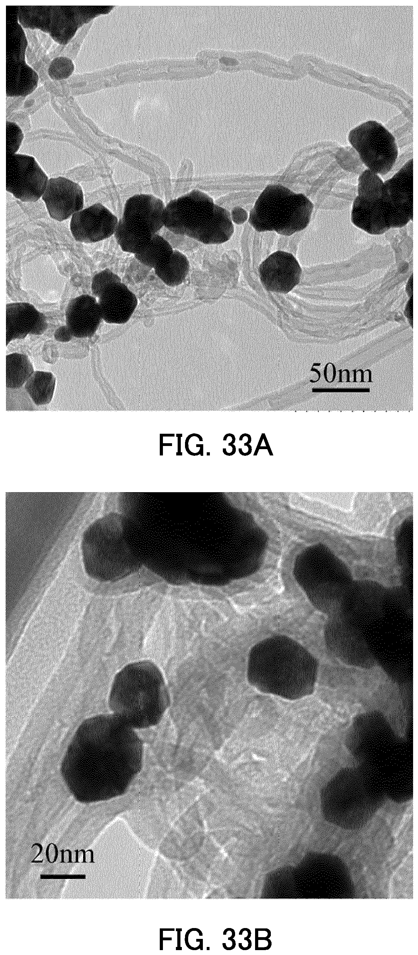

   FIG. 33A is a photograph instead of a drawing showing a TEM image of Example 11 of the present invention.
FIG. 33B is a photograph instead of a drawing showing an enlargement of a portion of FIG. 33A.

### [DESCRIPTION OF EMBODIMENTS]

Embodiments of the present invention will be described as follows with reference to the drawings. However, the present invention is not limited to the following embodiments and may be implemented in various manners within a scope not departing from the gist thereof. Note that description is omitted as appropriate in some instances in order to avoid repetition.

### [First Embodiment]

First, a method for manufacturing metal nanoparticles according to a first embodiment will be described with reference to FIG. 1. FIG. 1 is a flowchart illustrating a method for manufacturing metal nanoparticles according to the first embodiment. As illustrated in FIG. 1, the method for manufacturing metal nanoparticles according to the first embodiment includes a mixing step S1 and a heating step S2.

In the mixing step S1, at least one metal salt is added to an ionic liquid. Then, the metal salt is dissolved in the ionic liquid. As a result, metal ions are formed in the ionic liquid. Note that the ionic liquid is preferably stirred so that the metal salt dissolves easily.

In the heating step S2, the ionic liquid is heated to thermally reduce the metal ions. As a result, metal nanoparticles are formed (synthesized) in the ionic liquid. The heating temperature is at most a temperature causing thermal decomposition of the metal salt, but is not particularly limited as long as a thermal reduction reaction in the metal ions occurs. Typically, the heating temperature is selected from within a range of 200°C to 300°C. Note that the ionic liquid is preferably stirred at a predetermined rotational speed so that the thermal reduction reaction occurs easily. The rotational speed [rpm] is not particularly limited, but is generally preferred to be at least 50 [rpm] and at most 4000 [rpm], and more preferably at least 100 [rpm] and at most 2000 [rpm]. The heated stirring time can be determined as appropriate.

The metal nanoparticles formed in the ionic liquid are separated from the ionic liquid using a centrifuge, for example. It is preferable to remove any ionic liquid remaining on the metal nanoparticles by washing the metal nanoparticles after separation from the ionic liquid. An organic solvent that dissolves the ionic liquid can be used as a washing liquid. Specific examples of washing liquids include alcohol and acetonitrile.

The ionic liquid may be hydrophilic or hydrophobic, but the type thereof is not particularly limited. Specific examples of ionic liquids applicable to the present invention include aliphatic ionic liquids, imidazolium-based ionic liquids, and pyridium-based ionic liquids. Examples of aliphatic ionic liquids include N,N,N-trimethyl-N-propylammonium bis(trifluoromethanesulfonyl)imide, N-methyl-N-propylpiperidinium bis(trifluoromethanesulfonyl)imide, N,N-diethyl-N-methyl-N-(2-methoxyethyl)ammonium bis(trifluoromethanesulufonyl)imide, and N,N-diethyl-N-methyl-N-(2-methoxyethyl)ammonium tetrafluoroborate. Examples of imidazolium-based ionic liquids include 1,3-dialkylimidazolium salts and 1,2,3-trialkylimidazolium salts. Examples of 1,3-dialkylimidazolium salts include 1-ethyl-3-methylimidazolium bromide, 1-ethyl-3-methylimidazolium chloride, 1-ethyl-3-methylimidazolium (L)-lactate, 1-ethyl-3-methylimidazolium hexafluorophosphate, 1-ethyl-3-methylimidazolium tetrafluoroborate, 1-butyl-3-methylimidazolium chloride, 1-butyl-3-methylimidazolium hexafluorophosphate, 1-butyl-3-methylimidazolium tetrafluoroborate, 1-butyl-3-methylimidazolium trifluoromethanesulfonate, 1-butyl-3-methylimidazolium (L)-lactate, 1-hexyl-3-methylimidazolium bromide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium trifluoromethanesulfonate, 1-octyl-3-methylimidazolium chloride, 1-octyl-3-methylimidazolium hexafluorophosphate, 1-decyl-3-methylimidazolium chloride, 1-dodecyl-3-methylimidazolium chloride, 1-tetradecyl-3-methylimidazolium chloride, 1-hexadecyl-3-methylimidazolium chloride, and 1-octadecyl-3-methylimidazolium chloride. Examples of 1,2,3-trialkylimidazolium salts include 1-ethyl-2,3-dimethylimidazolium bromide, 1-ethyl-2,3-dimethylimidazolium chloride, 1-butyl-2,3-dimethylimidazolium bromide, 1-butyl-2,3-dimethylimidazolium chloride, 1-butyl-2,3-dimethylimidazolium tetrafluoroborate, 1-butyl-2,3-dimethylimidazolium trifluoromethanesulfonate, 1-hexyl-2,3-dimethylimidazolium bromide, 1-hexyl-2,3-dimethylimidazolium chloride, 1-hexyl-2,3-dimethylimidazolium tetrafluoroborate, and 1-hexyl-2,3-dimethylimidazolium trifluoromethanesulfonate. Examples of pyridium-based ionic liquids include ethylpyridinium salts, butylpyridium salts, and hexylpyridium salts. Examples of ethylpyridinium salts include 1-ethylpyridinium bromide, and 1-ethylpyridinium chloride. Examples of butylpyridium salts include 1-butylpyridinium bromide, 1-butylpyridinium chloride, 1-butylpyridinium hexafluorophosphate, 1-butylpyridmium tetrafluoroborate, and 1-butylpyridinium trifluoromethanesulfonate. Examples of hexylpyridium salts include 1-hexylpyridium bromide, 1-hexylpyridium chloride, 1-hexylpyridium hexafluorophosphate, 1-hexylpyridium tetrafluoroborate, and 1-hexylpyridium trifluoromethanesulfonate.

The metal salt is not particularly limited as long as the metal salt dissolves and electrically dissociates in the ionic liquid. Specific examples of metal salts include salts such as that of platinum, nickel, palladium, copper, silver, aluminum, iron, cobalt, tin, and indium. A concentration range of the metal salt is not particularly limited, but is generally preferred to be at least 0.1 [mmol/L] and at most 20 [mmol/L], and more preferably at least 1 [mmol/L] and at most 5 [mmol/L]. Note that alloy metal nanoparticles may be formed when using two or more metal salts. For example, platinum-nickel alloy nanoparticles may be formed when using platinum and nickel salts. When using platinum and nickel salts, a concentration range of the platinum salt is generally preferred to be at least 0.1 [mmol/L] and at most 20 [mmol/L], and more preferably at least 1 [mmol/L] and at most 5 [mmol/L]. A concentration range of the nickel salt is generally preferred to be at least 0.1 [mmol/L] and at most 20 [mmol/L], and more preferably at least 1 [mmol/L] and at most 5 [mmol/L]. The concentration ratio between the platinum salt and the nickel salt may be selected from 1:99 to 99:1.

According to the present embodiment, the metal nanoparticles can be manufactured by one-pot synthesis. Therefore, the manufacturing of the metal nanoparticles is simplified. The manufacturing method for the metal nanoparticles according to the present embodiment can also be easily applied to a large-scale synthesis process of metal nanoparticles because the metal nanoparticles can be manufactured by one-pot synthesis.

Furthermore, the metal nanoparticles can be formed by thermal reduction according to the present embodiment. Accordingly, the metal nanoparticles can be formed using all of the components composing the metal nanoparticles among the components included in the metal salt. The metal nanoparticles can also be formed without using a reductant.

### [Second Embodiment]

Continuing, a method for manufacturing a metal nanoparticle-loaded carrier according to a second embodiment will be described with reference to FIG. 2. FIG. 2 is a flowchart illustrating the method for manufacturing the metal nanoparticle-loaded carrier according to the second embodiment. As illustrated in FIG. 2, the method for manufacturing the metal nanoparticle-loaded carrier according to the second embodiment includes a mixing step S11 and a heating step S12.

In the mixing step S11, at least one metal salt and a support material is added to an ionic liquid. The metal salt is then dissolved in the ionic liquid. As a result, metal ions are formed in the ionic liquid. Note that the ionic liquid is preferably stirred so that the metal salt dissolves easily.

In the heating step S12, the ionic liquid is heated to thermally reduce the metal ions. As a result, metal nanoparticles are formed (synthesized) in the ionic liquid and the metal nanoparticles are supported on the support material. Thus, the metal nanoparticle-loaded carrier (support that supports the metal nanoparticles) is formed in the ionic liquid. In detail, the metal nanoparticles are supported in a single layer on the support. Also, the density of the metal nanoparticles on the support is at least 50 particles/µm² and at most 200 particles/µm².

A heating temperature used in the heating step S12 is at most the lower of a temperature that causes thermal decomposition of the metal salt or a temperature that causes thermal decomposition of the support material. As long as a thermal reduction reaction of the metal ions can occur, the temperature is not particularly limited. Typically, the heating temperature is selected from within a range from 200°C to 300°C. Note that the ionic liquid is preferably stirred at a predetermined rotational speed so that the thermal reduction reaction occurs easily. Also, the metal nanoparticles are more easily supported on the support material through stirring. The rotational speed [rpm] is not particularly limited, but is generally preferred to be at least 50 [rpm] and at most 4000 [rpm], and more preferably at least 100 [rpm] and at most 2000 [rpm]. A heated stirring time may be determined as appropriate, but the amount (number) of the metal nanoparticles supported on the support material tends to increase as the heated stirring time lengthens.

The metal nanoparticle-loaded carrier formed in the ionic liquid is separated from the ionic liquid using a centrifuge, for example. It is preferable to remove any ionic liquid remaining on the metal nanoparticles or support material by washing the metal nanoparticle-loaded carrier after separation from the ionic liquid. Washing liquids thereof are previously described in the first embodiment, and description thereof is therefore omitted here.

The support material is not particularly limited, and may be appropriately selected according to the intended use of the metal nanoparticles. For example, the support material may be alumina (Al₂O₃), silica (SiO₂), or a carbon material. Examples of carbon materials include carbon nanotubes, graphene, and carbon black. More specific examples of carbon materials include single-walled carbon nanotubes (SWCNT), multi-walled carbon nanotubes (MWCNT), graphene nanoplatelets (flake graphite), and conductive carbon black.

The concentration range of the metal salt is not particularly limited, but is generally preferred to be at least 0.1 [mmol/L] and at most 20 [mmol/L], and more preferably at least 1 [mmol/L] and at most 5 [mmol/L]. The concentration range of the support material is also not particularly limited, but is generally preferred to be at least 0.001 [mg/mL] and at most 3 [mg/mL], and more preferably at least 0.1 [mg/mL] and at most 1 [mg/mL]. Note that alloy metal nanoparticles may be supported on the support when using two or more metal salts. For example, platinum-nickel alloy nanoparticles can be supported on the support when using platinum and nickel salts. When using platinum and nickel salts as the metal salts and a carbon material as the support material, a concentration range of the platinum salt is generally preferred to be at least 0.1 [mmol/L] and at most 20 [mmol/L], and more preferably at least 1 [mmol/L] and at most 5 [mmol/L]. The concentration range of the nickel salt is generally preferred to be at least 0.1 [mmol/L] and at most 20 [mmol/L], and more preferably at least 1 [mmol/L] and at most 5 [mmol/L]. The concentration range of the carbon material is generally preferred to be at least 0.001 [mg/mL] and at most 3 [mg/mL], and more preferably at least 0.1 [mg/mL] and at most 1 [mg/mL].

The types of ionic liquid and metal salt are previously described in the first embodiment, and description thereof is therefore omitted here.

According to the present embodiment, the manufacture of the metal nanoparticles and the supporting of the metal nanoparticles on the support (support material) are achieved by one-pot synthesis. Therefore, the manufacture of the support that supports the metal nanoparticles (the metal nanoparticle-loaded carrier) is simplified. Also, the method for manufacturing the metal nanoparticle-loaded carrier according to the present embodiment can be easily applied to a large-scale synthesis process of a metal nanoparticle-loaded carrier because the metal nanoparticle-loaded carrier can be manufactured by one-pot synthesis.

Furthermore, according to the present embodiment, the metal nanoparticles can be formed by thermal reduction. Accordingly, the metal nanoparticles can be formed using all of the components composing the metal nanoparticles among the components included in the metal salt. The metal nanoparticles can also be formed without using a reductant.

Also according to the present embodiment, the metal nanoparticles can be easily supported on a material on which it is generally difficult to support metal nanoparticles, such as carbon nanotubes or graphene. That is, because materials such as carbon nanotubes or graphene have base surfaces composed of chemically inert hexagonal planes, no functional group exists on the surfaces thereof. As such, it is generally difficult to support metal nanoparticles on materials such as carbon nanotubes or graphene. Therefore, when using a material such as carbon nanotubes or graphene as the support (carbon support), a process such as introducing a functional group to the surface thereof or wrapping the material with a high-molecule material together with the metal nanoparticles is necessary. However, when undergoing such a process, for example, a resulting electrode catalyst cannot be expected to have favorable functionality or a long life. On the contrary, according to the present embodiment, metal nanoparticles can be supported on a material such as carbon nanotubes or graphene without undergoing the process such as introducing a functional group to the surface thereof or wrapping the material with a high-molecule material together with the metal nanoparticles, even when using the material such as carbon nanotubes or graphene as a support (carbon support). Therefore, according to the present embodiment, for example, a resulting electrode catalyst can have increased functionality and an extended life.

It is presumed that the metal nanoparticles are supported on the support because the ionic liquid behaves like a solid at and around the interface between the support material and the ionic liquid. That is, it is presumed that a thin film of a solid-like ionic liquid is formed on the surface of the support material, and the metal nanoparticles are captured by the thin film. Therefore, the solid-like ionic liquid is presumed to exist between the support and the metal nanoparticles in the metal nanoparticle-loaded carrier. Accordingly, the solid-like ionic liquid is expected to inhibit corrosion of the support, and extend the life of the electrode catalyst, for example.

### [Third Embodiment]

Continuing, the method for manufacturing the metal nanoparticle-loaded carrier according to a third embodiment will be described with reference to FIG. 3. However, the description will focus on points of difference with the second embodiment and appropriately omit points of commonality with the second embodiment. The third embodiment differs from the second embodiment in that a bromide is mixed with the ionic liquid in the mixing step S11. Note that the bromide is a compound including bromine that has an acid value of "-1".

FIG. 3 is a flowchart illustrating the method for manufacturing the metal nanoparticle-loaded carrier according to the third embodiment. As illustrated in FIG. 3, the method for manufacturing the metal nanoparticle-loaded carrier according to the third embodiment includes a mixing step S11 and a heating step S12.

In the mixing step S11, at least one metal salt, a support material, and a bromide are added to an ionic liquid. Then, the metal salt and the bromide are dissolved in the ionic liquid. As a result, metal ions and bromide ions are formed in the ionic liquid.

In the heating step S12, the ionic liquid is heated and the metal ions are thermally reduced. As a result, a metal nanoparticle-loaded carrier is formed in the ionic liquid. Furthermore, the bromide ions control the shape (form) of the metal nanoparticles. In detail, the surface of the metal nanoparticles has a shape that includes a flat surface. The flat surface includes crystalline surfaces of the metal nanoparticles. The metal nanoparticles are typically formed in polygonal shapes.

The bromide is not particularly limited as long as the bromide dissolves in the ionic liquid. For example, an aliphatic bromide may be used when an aliphatic ionic liquid is used. Similarly, an imidazolium-based or pyridium-based bromide may be used when an imidazolium-based or pyridium-based ionic liquid is used.

The concentration range of the bromide is not particularly limited, but is generally preferred to be at least 50 [mmol/L] and at most 200 [mmol/L], and more preferably at least 75 [mmol/L] and at most 150 [mmol/L].

According to the present embodiment, the shape (form) of the metal nanoparticles can be controlled by dissolving bromide ions in the ionic liquid. For example, platinum (Pt) varies in catalytic activity (catalytic ability) depending on crystalline surfaces thereof. Accordingly, the catalytic activity of platinum nanoparticles can be controlled by controlling the shape of the platinum nanoparticles so that the surface of the platinum nanoparticles includes specific crystalline surfaces.

Embodiments (the first to third embodiments) of the present invention are described above with reference to the drawings. However, the present invention is not limited to the above embodiments and may be implemented in various manners within a scope not departing from the gist thereof. For example, the bromide may be mixed with the ionic liquid as in the third embodiment in the mixing step S1 of the method for manufacturing metal nanoparticles described with reference to FIG. 1.

### [Examples]

The present invention will be more specifically described below using examples. Note that the present invention is in no way limited to the scope of the examples.

### Examples 1 to 3

A sample obtained by dissolving nickel (Ni) and platinum (Pt) salts in 1 mL of an ionic liquid was enclosed in a screw tube. A hot stirrer produced by AS ONE Corporation was then set to 300°C, and heated stirring was performed.

In Example 1, 1-butyl-3-methylimidazolium bis(trifluoromethanesulfonyl)imide ([C₄mim][Tf₂N]) (produced by Kanto Chemical Co., Inc.) was used as the ionic liquid. C₄F₁₂NiN₂O₈S₄ (Ni[Tf₂N]₂) was used as the Ni salt. Platinum(II) acetylacetonate (Pt(acac)₂) (produced by Wako Pure Chemical Industries, Ltd.) was used as the Pt salt. The concentrations of the Ni and Pt salts were both 5 [mmol/L]. The rotational speed was 300 [rpm], and the heated stirring time was 1 hour.

In Example 2, [C₄mim][Tf₂N] (produced by Kanto Chemical Co., Inc.) was used as the ionic liquid. Ni[Tf₂N]₂ was used as the Ni salt. Potassium tetrachloroplatinate(II) (K₂PtCl₄) (produced by Wako Pure Chemical Industries, Ltd.) was used as the Pt salt. The concentrations of the Ni and Pt salts were both 5 [mmol/L]. The rotational speed was 300 [rpm] and the heated stirring time was 24 hours.

In Example 3, [C₄mim][Tf₂N] (produced by Kanto Chemical Co., Inc.) was used as the ionic liquid. Ni[Tf₂N]₂ was used as the Ni salt. Hydrogen hexachloroplatinate(IV) hexahydrate, 99.9% (H₂PtCl₆·6H₂O) (produced by Wako Pure Chemical Industries, Ltd.) was used as the Pt salt. The concentration of the Ni salt was 5 [mmol/L] and the concentration of the Pt salt was 1.67 [mmol/L]. In other words, the concentration ratio of the Pt salt to the Ni salt was approximately 3 to 1 (Pt salt:Ni salt = 3:1). The rotational speed was 300 [rpm] and the heated stirring time was 1 hour.

The Ni[Tf₂N]₂ used as the Ni salt was synthesized by the following method. First, 1.65 g of bis(trifluoromethanesulfonyl)imide (produced by Morita Chemical Industries Co., Ltd.) was dissolved in ultra-pure water. After nitrogen bubbling was performed for 30 minutes, 0.27 g of nickel hydroxide (produced by Wako Pure Chemical Industries, Ltd.) was added. The solution was then heated and stirred for 2 hours at 70°C in a nitrogen atmosphere. After turning green, the solution was allowed to cool to room temperature while being kept in the nitrogen atmosphere. All of the operation was undertaken entirely in a nitrogen atmosphere. After unreacted precursor had been removed from the resulting solution by suction filtration, the liquid from the solution after suction filtration was evaporated using an evaporator (produced by BUCHI Labortechnik AG). Thereafter, the thus obtained product was vacuum dried at 180°C. Finally, a yellow powder was obtained.

The metal nanoparticles in the ionic liquids of Examples 1 to 3 were observed using a transmission electron microscope (TEM) (H-7650 produced by Hitachi High-Technologies Corporation). A grid including a high-resolution carbon supporting film (STEM Cu 100 µ grid produced by Okenshoji Co., Ltd.), an EM fine grid (F-400 produced by Nisshin EM Co., Ltd.), and a microgrid (STEM Cu 150 µ grid produced by Okenshoji Co., Ltd.) was used.

Specifically, with respect to each of the ionic liquids of Examples 1 to 3, the ionic liquid (3 µL) was dropped on to the grid and left to stand for approximately 10 minutes to observe the metal nanoparticles in each of the ionic liquids of Examples 1 to 3. Next, the metal nanoparticles were observed with the TEM after immersing the grid in acetonitrile for 1 minute and 30 seconds to wash away excess ionic liquid. The composition of the particles observed with the TEM was identified using an energy dispersive X-ray spectroscope (EDX) (Genesis XM2 produced by AMETEK, Inc.) installed in the TEM.

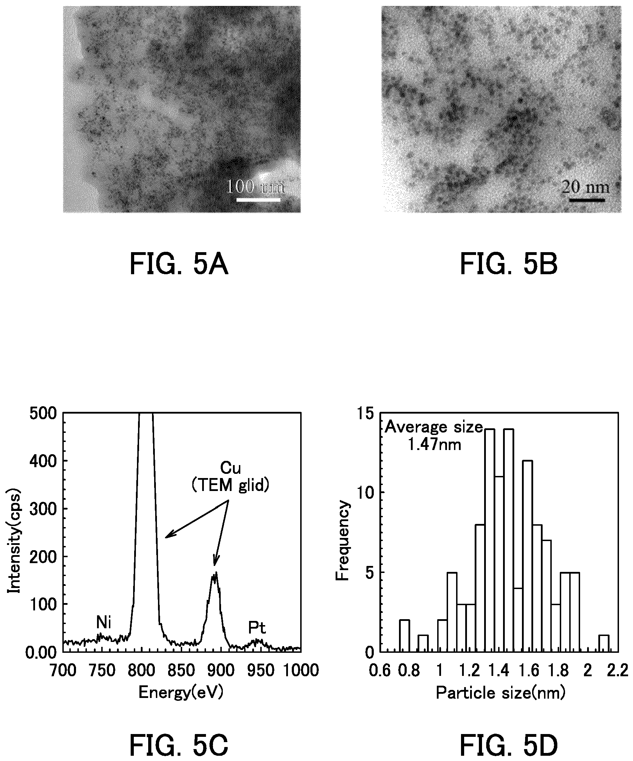

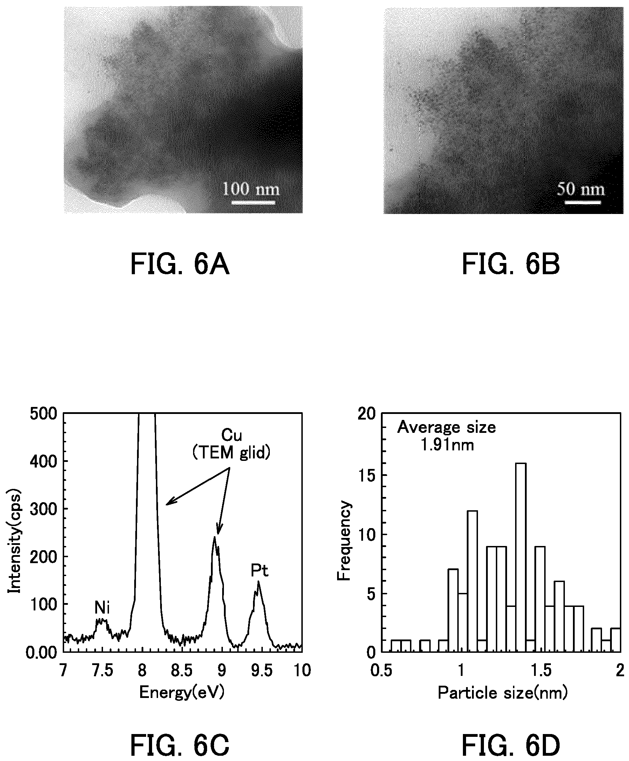

FIG. 5A is a photograph instead of a drawing showing a TEM image of Example 1. FIG. 5B is a photograph instead of a drawing showing an enlargement of a portion of FIG. 5A. FIG. 5C illustrates a result of a composition analysis performed on Example 1 using the EDX. FIG. 5D illustrates a particle-size distribution of Example 1. FIG. 6A is a photograph instead of a drawing showing a TEM image of Example 2. FIG. 6B is a photograph instead of a drawing showing an enlargement of a portion of FIG. 6A. FIG. 6C illustrates a result of a composition analysis performed on Example 2 using the EDX. FIG. 6D illustrates a particle-size distribution of Example 2. FIG. 7A is a photograph instead of a drawing showing a TEM image of Example 3. FIG. 7B is a photograph instead of a drawing showing an enlargement of a portion of FIG. 7A. FIG. 7C illustrates a result of a composition analysis performed on Example 3 using the EDX. FIG. 7D illustrates a particle-size distribution of Example 3. In FIGS. 5C, 6C, and 7C, the vertical axis indicates spectral intensity and the horizontal axis indicates energy. In FIGS. 5D, 6D, and 7D, the vertical axis indicates particle frequency and the horizontal axis indicates particle size.

As illustrated in FIGS. 5A to 5D, 6A to 6D, and 7A to 7D, metal nanoparticles composed of either or both of Pt and Ni were synthesized only by the process of dissolving the Pt and Ni salts used as metal salts in the ionic liquid and heated stirring of the ionic liquid.

When nanoparticles were synthesized by dissolving Pt(acac)₂, which is a divalent Pt salt, the average particle size was 1.47 nm and the particle size was dispersed. When nanoparticles were synthesized by dissolving K₂PtCl₄, which is also a divalent Pt salt, the average particle size was 1.91 nm and the particle size was also dispersed. By contrast, when nanoparticles were synthesized by dissolving H₂PtCl₆·6H₂O, which is a tetravalent Pt salt, the average particle size was 2.29 nm. Therefore, it was understood that aggregation occurs readily when using tetravalent Pt salt.

### Examples 4 to 7 and Comparative Example

Pt and Ni salts were dissolved in 1 mL of an ionic liquid at room temperature, and then 1 mg of a carbon material was further added to the ionic liquid. The thus obtained sample was then stirred for 12 hours and placed in a two-necked flask. Subsequently, a vacuum draw and a nitrogen purge were performed three times to obtain a nitrogen atmosphere. The sample was then heated and stirred for 6 hours at 300°C using a heating mantle. The rotational speed was 300 [rpm].

In each of Examples 4 to 7, trimethylpropylammonium bis(trifluoromethanesulfonyl)imide ([N_{3,1,1,1}][Tf₂N]) (produced by Kanto Chemical Co., Inc.) was used as the ionic liquid. Ni[Tf₂N]₂ was used as the Ni salt. Pt(acac)₂ (produced by Wako Pure Chemical Industries, Ltd.) was used as the Pt salt. The concentration of the Pt salt was 5 [mmol/L] and the concentration of the Ni salt was 1.67 [mmol/L]. In other words, the concentration ratio of the Pt salt to the Ni salt was approximately 3 to 1 (Pt salt:Ni salt = 3:1). Single-walled carbon nanotubes (SWCNT) (FH-P produced by Meijo Nano Carbon Co., Ltd.) were used as the carbon material (support material) in Example 4. Multi-walled carbon nanotubes (MWCNT) (produced by Sigma-Aldrich Corporation) were used as the carbon material (support material) in Example 5. A graphene sheet (06-0220 (thickness: 6-8 nm, width: 25 µm) produced by Strem Chemicals, Inc.) was used as the carbon material (support material) in Example 6. Conductive carbon black (VULCAN (registered Japanese trademark)-XC72 produced by Cabot Corporation) was used as the carbon material (support material) in Example 7.

Note that in Examples 4 and 5, in order to increase dispersibility of the SWCNT or the MWCNT, a dispersion thereof was placed in an agate mortar and appropriately ground for 10 minutes before placing the sample stirred for 12 hours in the two-necked flask.

The carbon materials in the ionic liquids of Examples 4 to 7 were observed using the TEM (H-7650 produced by Hitachi High-Technologies Corporation) under the same conditions as Examples 1 to 3. Also, the compositions of the particles observed with the TEM were identified using the EDX (Genesis XM2 produced by AMETEK, Inc.) installed in the TEM under the same conditions as Examples 1 to 3.

FIG. 8A is a photograph instead of a drawing showing a TEM image of Example 4. FIG 8B is a photograph instead of a drawing showing an enlargement of a portion of FIG. 8A. FIG. 8C illustrates a result of a composition analysis performed on Example 4 using the EDX. FIG. 8D illustrates a particle-size distribution of Example 4. FIG. 9A is a photograph instead of a drawing showing a TEM image of Example 5. FIG 9B is a photograph instead of an enlargement showing a portion of FIG. 9A. FIG. 9C illustrates a result of a composition analysis performed on Example 5 using the EDX. FIG. 9D illustrates a particle-size distribution of Example 5. FIG. 10A is a photograph instead of a drawing showing a TEM image of Example 6. FIG. 10B is a photograph instead of a drawing showing an enlargement of a portion of FIG. 10A. FIG. 10C illustrates a result of a composition analysis performed on Example 6 using the EDX. FIG. 10D illustrates a particle-size distribution of Example 6. FIG. 11A is a photograph instead of a drawing showing a TEM image of Example 7. FIG. 11B is a photograph instead of a drawing showing an enlargement of a portion of FIG. 11A. FIG. 11C illustrates a result of a composition analysis performed on Example 7 using the EDX. FIG. 11D illustrates a particle-size distribution of Example 7. In FIGS. 8C, 9C, 10C, and 11C, the vertical axis indicates spectral intensity and the horizontal axis indicates energy. In FIGS. 8D, 9D, 10D, and 11D, the vertical axis indicates particle frequency and the horizontal axis indicates particle size.

As illustrated in FIG. 8A to 8D, 9A to 9D, 10A to 10D, and 11A to 11D, each carbon support (metal nanoparticle-loaded carrier) supporting metal nanoparticles composed of either or both of Pt and Ni was obtained only by the process of dissolving the Pt and Ni salts used as metal salts in the ionic liquid, further adding the carbon material to the ionic liquid, and then heated stirring of the ionic liquid. Furthermore, it was understood that the particle size and dispersibility varied depending on the carbon material (support material).

In each of Examples 4 to 7, the mixed solution heated and stirred for 6 hours at 300°C using a heating mantle was further subjected to ultrasonic cleaning for 5 minutes through addition of acetonitrile thereto. Thereafter, the sample supporting particles was precipitated using a centrifuge (Universal Refrigerated Centrifuge 5900 produced by Kubota Corporation). After performing this operation three times, the sample underwent 2 hours of vacuum drying and the carbon support supporting nanoparticles (metal nanoparticle-loaded carrier) was obtained.

The electrochemical behavior of the obtained metal nanoparticle-loaded carrier was evaluated using an electrochemical cell illustrated in FIG. 4. The catalytic activity of the obtained metal nanoparticle-loaded carrier was also evaluated using the electrochemical cell illustrated in FIG. 4. Furthermore, the electrochemical behavior and catalytic activity of Comparative Example (TEC10V30E produced by Tanaka Kikinzoku Kogyo K.K.) were evaluated using the electrochemical cell illustrated in FIG. 4.

FIG. 4 illustrates the electrochemical cell used in a voltammetric analysis on the present examples. As illustrated in FIG. 4, the electrochemical cell includes a working electrode 1, a reference electrode 2, and a counter electrode 3. In the present examples, an Ag/AgCl electrode was used as the reference electrode 2, and a Pt mesh electrode with a large surface area was used as the counter electrode 3. As an electrolytic solution 4, 0.1 [mol/L (298 K)] of perchloric acid (HClO₄) was used. For establishing a nitrogen or oxygen-saturated state to carry out the measurement, the electrolytic solution 4 was bubbled in advance with N₂ gas (99.9999%) or O₂ gas (99.999%) for at least 30 minutes. Electrochemical cleaning was performed before the measurement through 80-cycle sweeping within a potential range of -0.205 [V vs. Ag/AgCl] to 0. 945 [V vs. Ag/AgCl] at a rate of 50 m[Vs⁻¹].

A rotating disk electrode prepared by the following procedure was used as the working electrode 1. First, 400 µL of 2-propanol or 1-hexanol was mixed with 1 mg of the sample (metal nanoparticle-loaded carrier) to prepare a suspension. Subsequently, 10 µL of the suspension was applied to a glassy carbon electrode for use in the rotating disk electrode. After drying, the sample was fixed by applying 5 µL of 0.20 wt% NAFION (registered Japanese trademark) solution.

FIG. 12A illustrates results of a cyclic voltemmetric analysis performed on the metal nanoparticle-loaded carriers of Examples 4 to 7 in a state in which nitrogen was supplied to the electrolytic solution 4. Furthermore, FIG. 12A illustrates a result of a cyclic voltemmetric analysis performed on Comparative Example (TEC10V30E produced by Tanaka Kikinzoku Kogyo K.K.) in a state in which nitrogen was supplied to the electrolytic solution 4. The rotating disk electrode (working electrode 1) was stationary in the cyclic voltemmetric analysis. Also, the potential [V vs. RHE] of the working electrode 1 with respect to the reference electrode 2 (RHE) was altered in a range of 0.05 [V vs. RHE] to 1.2 [V vs. RHE] at a rate of 10 [mVs⁻¹].

FIG. 12B illustrates results of a linear sweep voltemmetric analysis performed on the metal nanoparticle-loaded carriers of Examples 4 to 7 in a state in which oxygen was supplied to the electrolytic solution 4. Furthermore, FIG. 12B illustrates a result of a linear sweep voltemmetric analysis performed on Comparative Example (TEC10V30E produced by Tanaka Kikinzoku Kogyo K.K.) in a state in which oxygen was supplied to the electrolytic solution 4. The rotating disk electrode (working electrode 1) was rotated at a rotational speed of 1600 [rpm] in the linear sweep voltammetric analysis. Also, the potential [V vs. RHE] of the working electrode 1 with respect to the reference electrode 2 (RHE) was altered in a range of 0 [V vs. RHE] to 1.2 [V vs. RHE] at a rate of 10 [mVs⁻¹].

In FIGS. 12A and 12B, the vertical axis indicates electric current and the horizontal axis indicates potential [V vs. RHE]. FIG. 12A illustrates cyclic voltemmetric curves (CV curves) corresponding to Comparative Example (TEC10V30E produced by Tanaka Kikinzoku Kogyo K.K.), Example 4 (PtNi-SWCNT), Example 5 (PtNi-MWCNT), Example 6 (PtNi-Graphene), and Example 7 (PtNi-VULCAN). FIG. 12B illustrates linear sweep voltemmetric curves (LSV curves) corresponding to Comparative Example (TEC10V30E produced by Tanaka Kikinzoku Kogyo K.K.), Example 4 (PtNi-SWCNT), Example 5 (PtNi-MWCNT), Example 6 (PtNi-Graphene), and Example 7 (PtNi-VULCAN).

It was understood from the results illustrated in FIGS. 12A and 12B that each of the metal nanoparticle-loaded carriers of Examples 4 to 7 had oxygen reductive activity that allows the carrier to be sufficiently usable as an electrode catalyst for a polymer electrolyte fuel cell. Furthermore, the metal nanoparticle-loaded carrier of Example 5 (PtNi-MWCNT) had the highest oxygen reductive activity among the metal nanoparticle-loaded carriers of Examples 4 to 7.

FIG. 13 illustrates a result of a durability test performed on the metal nanoparticle-loaded carrier of Example 5 (PtNi-MWCNT). Specifically, FIG. 13 illustrates a result of a linear sweep voltammetric analysis (0 cycles) performed before an oxidation-reduction reaction (durability test) was performed. FIG. 13 also illustrates a result of a linear sweep voltammetric analysis (5000 cycles) performed after the oxidation-reduction reaction (durability test) was performed 5000 times. The oxidation-reduction reaction was performed using the electrochemical cell illustrated in FIG. 4. Specifically, the potential [V vs. RHE] of the working electrode 1 with respect to the reference electrode 2 (RHE) was altered in a range of 0.1 [V vs. RHE] to 1.2 [V vs. RHE] at a rate of 10 [mVs⁻¹] in a state in which nitrogen was supplied to the electrolytic solution 4. As illustrated in FIG. 13, an oxygen-reductive electric current higher than when the linear sweep voltammetric analysis was conducted before the durability test was detected in the linear sweep voltammetric analysis after the durability test in a potential range from 0.8 [V vs. RHE] to 1.0 [V vs. RHE].

### Examples 8, 9 and Comparative Example

Pt and Ni salts were dissolved in an ionic liquid at room temperature. Then, 1 mg of a carbon material was added to the ionic liquid and the thus obtained sample was stirred for 12 hours and placed in a two-necked flask. Subsequently, a vacuum draw and a nitrogen purge were performed three times to obtain a nitrogen atmosphere. The sample was then heated and stirred at a set temperature of 300°C using a heating mantle. The heated stirring time was 4 hours. The rotational speed was 300 [rpm].

In each of Examples 8 and 9, [N_{3,1,1,1}][Tf₂N] (produced by Kanto Chemical Co., Inc.) was used as the ionic liquid. Ni[Tf₂N]₂ was used as the Ni salt. Pt(acac)₂ (produced by Wako Pure Chemical Industries, Ltd.) was used as the Pt salt. MWCNT (produced by Sigma-Aldrich Corporation) were used as the carbon material (carbon support). The concentrations of the Ni and Pt salts in Example 8 were both 5 [mmol/L]. The concentration of the Pt salt was 5 [mmol/L] and the concentration of the Ni salt was 1.67 [mmol/L] in Example 9. In other words, the concentration ratio of the Pt salt to the Ni salt was approximately 3 to 1 (Pt salt:Ni salt = 3:1). Also in Examples 8 and 9, in order to increase dispersibility of the MWCNT, a dispersion thereof was placed in an agate mortar and appropriately ground for 10 minutes before placing the sample stirred for 12 hours in the two-necked flask.

The carbon material in the ionic liquid of each of Examples 8 and 9 was observed using the TEM (H-7650 produced by Hitachi High-Technologies Corporation) under the same conditions as Examples 1 to 3. FIG. 14A is a photograph instead of a drawing showing a TEM image of Example 8. FIG. 14B is a photograph instead of a drawing showing an enlargement of a portion of FIG. 14A. FIG. 15A is a photograph instead of a drawing showing a TEM image of Example 9. FIG. 15B is a photograph instead of a drawing showing an enlargement of a portion of FIG. 15A. As shown in FIGS. 14A, 14B, 15A, and 15B, carbon supports (metal nanoparticle-loaded carriers) each supporting metal nanoparticles composed of either or both of Pt and Ni were obtained.

In each of Examples 8 and 9, the mixed solution heated and stirred for 4 hours at 300°C using a heating mantle was further subjected to ultrasonic cleaning for 5 minutes through addition of acetonitrile thereto. Thereafter, the sample supporting particles was precipitated using a centrifuge (Universal Refrigerated Centrifuge 5900 produced by Kubota Corporation). After performing this operation three times, the sample underwent 2 hours of vacuum drying and the carbon support supporting nanoparticles (metal nanoparticle-loaded carrier) was obtained. The obtained metal nanoparticle-loaded carrier (PtNi-MWCNT) was in powder form.

X-ray diffraction (XRD) and quantitative analysis were performed on the metal nanoparticle-loaded carriers of Examples 8 and 9. Furthermore, a cyclic voltemmetric analysis was performed on the metal nanoparticle-loaded carriers of Examples 8 and 9. Also, the electrochemical surface area (ECSA) [m²/g] and mass activity MA [A/g] of the metal nanoparticles of Examples 8 and 9 were measured (calculated). Similarly, X-ray diffraction and cyclic voltemmetric analysis were performed on Comparative Example (TEC10V30E produced by Tanaka Kikinzoku Kogyo K.K.). The electrochemical surface area [m²/g] and mass activity MA [A/g] of Comparative Example were also measured (calculated). The electrochemical surface area and mass activity MA were calculated by analyzing the cyclic voltemmetric data.

Measurement data obtained by X-ray diffraction is illustrated in FIG. 16. FIG. 16 illustrates a result of the X-ray diffraction performed on the metal nanoparticle-loaded carrier of Example 8 (Pt salt:Ni salt = 1:1). FIG. 16 also illustrates a result of the X-ray diffraction performed on the metal nanoparticle-loaded carrier of Example 9 (Pt salt:Ni salt = 3:1). FIG. 16 further illustrates a result of the X-ray diffraction performed on Comparative Example (TEC10V30E produced by Tanaka Kikinzoku Kogyo K.K.).

In FIG. 16, the vertical axis indicates diffraction intensity (count per second; CPS) and the horizontal axis indicates diffraction angle (2 theta (2θ)). Also in FIG. 16, a graph 1601 indicates the X-ray diffraction data of Example 8. A graph 1602 indicates the X-ray diffraction data of Example 9. A graph 1603 indicates the X-ray diffraction data of Comparative Example.

The following Table 1 shows the diffraction angles (2θ) of the (111) surface (lattice planes) of Examples 8 and 9 and Comparative Example. As shown in Table 1, the diffraction angles of the (111) surfaces of Examples 8 and 9 were both larger than that of the (111) surface of Comparative Example. The reason for the above is thought to be that the metal nanoparticles of Examples 8 and 9 each included an alloy of Pt and Ni.

**[Table 1]**

| Sample | Diffraction angle (2θ) of surface (111) |
|---|---|
| Example 8 (Pt salt:Ni salt = 1:1) | 39.910° |
| Example 9 (Pt salt:Ni salt = 3:1) | 39.90° |
| Comparative example (TEC10V30E) | 39.516° |

The quantitative analysis was performed based on inductively coupled plasma (ICP) mass spectrometry. The following Table 2 shows the quantitative analysis results. Specifically, Table 2 shows a mass ratio between the Pt and Ni (Pt:Ni) included in the metal nanoparticle-loaded carrier of Example 8 (Pt salt:Ni salt = 1:1). Table 2 also shows a mass ratio between the Pt and Ni (Pt:Ni) included in the metal nanoparticle-loaded carrier of Example 9 (Pt salt:Ni salt = 3:1).

**[Table 2]**

| Sample | Pt:Ni |
|---|---|
| Example 8 (Pt salt:Ni salt = 1:1) | 1.732:1 |
| Example 9 (Pt salt:Ni salt = 3:1) | 4.019:1 |

FIG. 17 illustrates results of a cyclic voltemmetric analysis performed on the metal nanoparticle-loaded carriers of Examples 8 and 9. FIG. 17 further illustrates a result of a cyclic voltemmetric analysis performed on Comparative Example (TEC10V30E produced by Tanaka Kikinzoku Kogyo K.K.). The cyclic voltemmetric analysis was performed in a state in which nitrogen was supplied to the electrolytic solution 4 using the electrochemical cell illustrated in FIG. 4. In the cyclic voltemmetric analysis, the rotating disk electrode (working electrode 1) was stationary. Also, the potential [V vs. RHE] of the working electrode 1 with respect to the reference electrode 2 (RHE) was altered in a range of 0.05 [V vs. RHE] and 1.2 [V vs. RHE] at a rate of 10 [mVs⁻¹].

In FIG. 17, the vertical axis indicates electric current and the horizontal axis indicates potential [V vs. RHE]. FIG. 17 illustrates cyclic voltemmetric curves (CV curves) corresponding to Example 8 (Pt salt:Ni salt = 1:1), Example 9 (Pt salt:Ni salt = 3:1), and Comparative Example (TEC10V30E produced by Tanaka Kikinzoku Kogyo K.K.).

It was understood from the results illustrated in FIG. 17 that each of the metal nanoparticle-loaded carriers of Examples 8 and 9 had oxygen reductive activity that allows the carrier to be sufficiently usable as an electrode catalyst for a polymer electrolyte fuel cell. Example 8 (Pt salt:Ni salt = 1:1) also obtained a result in which the oxygen reductive activity was higher than Example 9 (Pt salt: Ni salt = 3:1).

The cyclic voltemmetric analysis was performed once per every 1000 times that an oxidation-reduction reaction was performed to measure (calculate) the electrochemical surface area. The oxidation-reduction reaction was performed 15,000 times. FIG. 18 illustrates the measurement result of the electrochemical surface area of the metal nanoparticles (Pt salt:Ni salt = 1:1) of Example 8. FIG. 18 also illustrates the measurement result of the electrochemical surface area of the metal nanoparticles (Pt salt:Ni salt = 3:1) of Example 9. FIG. 18 further illustrates the measurement result of the electrochemical surface area of Comparative Example (TEC10V30E produced by Tanaka Kikinzoku Kogyo K.K.). In FIG. 18, the vertical axis indicates the percentage [%] of change in the electrochemical surface area (ECSA) and the horizontal axis indicates the number of performances (cycles) of the oxidation-reduction reaction.

As illustrated in FIG. 18, the electrochemical surface area decreased as the oxidation-reduction reaction was repeated, but the percentage of decrease in the electrochemical surface area of Examples 8 and 9 was small compared to Comparative Example.

The mass activity MA of the metal nanoparticles of Example 8 (Pt salt:Ni salt = 1:1), the metal nanoparticles of Example 9 (Pt salt:Ni salt = 3:1), and Comparative Example (TEC10V30E produced by Tanaka Kikinzoku Kogyo K.K.) was measured (calculated) using the results of the cyclic voltemmetric analysis performed before the oxidation-reduction reaction. The measurement results are illustrated in FIG. 19.

In FIG. 19, the vertical axis indicates mass activity MA [A/g]. As illustrated in FIG. 19, the mass activity MA of Examples 8 and 9 was greater than the mass activity MA of Comparative Example both before and after the oxidation-reduction reaction was performed. Furthermore, the mass activity MA of Example 8 was greater after than before the oxidation-reduction reaction.

The metal nanoparticle-loaded carrier of Example 8 before the oxidation-reduction reaction was performed was observed using a scanning transmission electron microscope (STEM) (JEM-ARM300F produced by JEOL Ltd.). FIG. 20 is a photograph instead of a drawing showing an STEM image of the metal nanoparticle-loaded carrier of Example 8 before the oxidation-reduction reaction was performed. As shown in FIG. 20, lattice fringes matching the (111) surface (lattice planes) of the Pt were observed.

The metal nanoparticle-loaded carrier of Example 8 before the oxidation-reduction reaction was performed was observed using the STEM (JEM-ARM300F produced by JEOL Ltd.). Specifically, a dark field image and a TEM image were acquired. Also, distribution images (two-dimensional images showing element distribution) were acquired using an EDX installed in the STEM that was used. FIG. 21 is a photograph instead of a drawing showing the dark field image. FIG. 22 is a photograph instead of a drawing showing a distribution image of Pt. FIG. 23 is a photograph instead of a drawing showing a distribution image of Ni. FIG. 24 is a photograph instead of a drawing showing the distribution image of Pt shown in FIG. 22 superimposed upon the distribution image of Ni shown in FIG. 23. FIG. 25 is a photograph instead of a drawing showing the TEM image superimposed upon the distribution image shown in FIG. 24.

The metal nanoparticle-loaded carrier of Example 8 was observed using the STEM (JEM-ARM300F produced by JEOL Ltd.) after the oxidation-reduction reaction had been performed 15,000 times. FIG. 26 is a photograph instead of a drawing showing an STEM image of the metal nanoparticle-loaded carrier of Example 8 after the oxidation-reduction reaction was performed. As shown in FIG. 26, lattice fringes matching the (111) surface (lattice planes) of the Pt were observed. Lattice fringes matching the (111) surface of the Ni were also observed.

The metal nanoparticle-loaded carrier of Example 8 was observed using the STEM (JEM-ARM300F produced by JEOL Ltd.) after the oxidation-reduction reaction had been performed 15,000 times. Specifically, a dark field image and a TEM image were acquired. Distribution images were also acquired using the EDX installed in the STEM that was used. FIG. 27 is a photograph instead of a drawing showing the dark field image. FIG. 28 is a photograph instead of a drawing showing a distribution image of the Pt. FIG. 29 is a photograph instead of a drawing showing a distribution image of the Ni. FIG. 30 is a photograph instead of a drawing showing the distribution image of the Pt shown in FIG. 28 superimposed upon the distribution image of the Ni shown in FIG. 29. FIG. 31 is a photograph instead of a drawing showing the TEM image superimposed upon the distribution image shown in FIG. 30.

As shown in FIGS. 21 to 25, the Ni particles were overlapping the Pt particles in the metal nanoparticle-loaded carrier before the oxidation-reduction reaction was performed. Also, as shown in FIGS. 27 to 31, the Ni particles were overlapping the Pt particles in the metal nanoparticle-loaded carrier after the oxidation-reduction reaction was performed in the same manner as before the oxidation-reduction reaction was performed. However, the number of Ni particles after the oxidation-reduction reaction was performed was slightly smaller than before the oxidation-reduction reaction was performed. The reason for the above is thought to be that the Ni dissolved in the electrolytic solution 4.

### Examples 10 and 11

A Pt salt and a bromide were dissolved in 2 mL of an ionic liquid at room temperature, and then 5 mg of a carbon material was further added to the ionic liquid. The ionic liquid was then stirred for 1 hour. The resulting dispersion was then placed in an agate mortar and ground for 10 minutes. Thereafter, the dispersion was placed in a two-necked flask. Subsequently, a vacuum draw and a nitrogen purge were performed three times to obtain a nitrogen atmosphere. The dispersion was then heated and stirred at 300°C using a heating mantle. The rotational speed was 300 [rpm].

In each of Examples 10 and 11, [N_{3,1,1,1}][Tf₂N] (produced by Kanto Chemical Co., Inc.) was used as the ionic liquid. Pt(acac)₂ (produced by Wako Pure Chemical Industries, Ltd.) was used as the Pt salt. MWCNT (produced by Sigma-Aldrich Corporation) were used as the carbon material. As the bromide, 1-ethyl-3-methylimidazolium bromide ([C₂mim]Br) was used. In Examples 10 and 11, the concentration of Pt salt was 5 [mmol/L]. The concentration of the bromide was 100 [mmol/L].

In Example 10, the heated stirring time was 15 minutes. In Example 11, the heated stirring time was 1 hour. The [C₂mim]Br electrically dissociated into cations ([C₂mim]⁺) and anions (Br⁻) through the heated stirring as shown in the following structural formula.

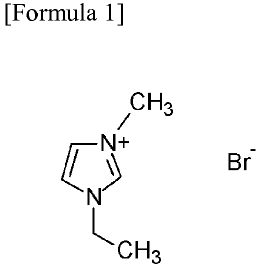

The carbon materials in the ionic liquids of Examples 10 and 11 were observed using the TEM (H-7650 produced by Hitachi High-Technologies Corporation) under the same conditions as Examples 1 to 3. FIG. 32A is a photograph instead of a drawing showing a TEM image of Example 10. FIG. 32B is a photograph instead of a drawing showing an enlargement of a portion of FIG. 32A. FIG. 33A is a photograph instead of a drawing showing a TEM image of Example 11. FIG 33B is a photograph instead of a drawing showing an enlargement of a portion of FIG. 33A.

As shown in FIGS. 32A, 32B, 33A, and 33B, metal nanoparticles (Pt particles) were formed in polygonal shapes. In other words, Pt particles whose surface includes crystalline surfaces were formed. As shown in FIG. 32B, the average length of the sides (crystalline surfaces) of the metal nanoparticles (Pt) of Example 10 was 14.01 ± 3.72 nm. As shown in FIG. 33B, the average length of the sides (crystalline surfaces) of the metal nanoparticles (Pt) of Example 11 was 15.92 ± 2.17 nm.

In Examples 10 and 11, acetonitrile was further added and 10-minute ultrasonic cleaning was performed twice. In addition, water was added and 10-minuite ultrasonic cleaning was further performed once. Thereafter, vacuum drying was performed for 12 hours and a metal nanoparticle-loaded carrier in powder form was obtained. The electrochemical surface area (ECSA) and mass activity MA of the obtained metal nanoparticles were measured using the electrochemical cell illustrated in FIG. 4. Current density was also measured (calculated) by dividing the value of the mass activity MA by the electrochemical surface area. The measurement results are shown below in Table 3.

**[Table 3]**

| Sample | ECSA [m²/g] | MA [A/g] | Current density [A/m²] |
|---|---|---|---|
| Example 10 | 38.34 | 85.29 | 2.22 |
| Example 11 | 7.59 | 52.46 | 6.92 |

As shown in Table 3, the current density of Example 11 was greater than the current density of Example 10.

### [INDUSTRIAL APPLICABILITY]

The present invention can be applied to the manufacture of metal nanoparticles and metal nanoparticle-loaded carriers. The present invention is particularly expected to contribute to the manufacture of promising catalysts for use as oxygen reduction electrocatalysts for polymer electrolyte fuel cells or electrode catalysts for air cells.

### [REFERENCE SIGNS LIST]

- 1: Working electrode
- 2: Reference electrode
- 3: Counter electrode

## Claims

1. A method for manufacturing metal nanoparticles, comprising:
adding at least one metal salt to an ionic liquid to form metal ions in the ionic liquid; and
heating the ionic liquid to which the metal salt has been added to thermally reduce the metal ions.

2. The method for manufacturing metal nanoparticles according to claim 1, wherein
the metal salt includes a group 10 element.

3. The method for manufacturing metal nanoparticles according to claim 1 or 2, wherein
at least two metal salts are added to the ionic liquid to manufacture alloy nanoparticles as the metal nanoparticles.

4. A method for manufacturing a metal nanoparticle-loaded carrier, comprising:
adding a support material and at least one metal salt to an ionic liquid to form metal ions in the ionic liquid; and
heating the ionic liquid to which the support material and the metal salt have been added to thermally reduce the metal ions.

5. The method for manufacturing a metal nanoparticle-loaded carrier according to claim 4, wherein
the metal salt includes a group 10 element.

6. The method for manufacturing a metal nanoparticle-loaded carrier according to claim 4 or 5, wherein
at least two metal salts are added to the ionic liquid, and
the metal nanoparticles include alloy nanoparticles.

7. The method for manufacturing a metal nanoparticle-loaded carrier according any one of claims 4 to 6, wherein
the support material is a carbon material.

8. The method for manufacturing a metal nanoparticle-loaded carrier according to any one of claims 4 to 7, wherein
the metal nanoparticles are supported in a single layer on the support.

9. A metal nanoparticle-loaded carrier, comprising:
metal nanoparticles; and
a support supporting the metal nanoparticles, wherein
the metal nanoparticles are supported in a single layer on the support.

10. The metal nanoparticle-loaded carrier according to claim 9, wherein
a density of the metal nanoparticles on the support is at least 50 particles/µm² and at most 200 particles/µm².

11. The metal nanoparticle-loaded carrier according to claim 9 or 10, wherein
the support includes a carbon material.

12. The metal nanoparticle-loaded carrier according to any one of claims 9 to 11, wherein
the metal nanoparticles include a group 10 element.

13. The metal nanoparticle-loaded carrier according to any one of claims 9 to 12, wherein
the metal nanoparticles include alloy nanoparticles.

14. The metal nanoparticle-loaded carrier according to any one of claims 9 to 13, wherein
the metal nanoparticles include at least one of platinum nanoparticles, nickel nanoparticles, and platinum-nickel alloy nanoparticles.

15. The metal nanoparticle-loaded carrier according to any one of claims 9 to 14, further comprising:
a solid-like ionic liquid, wherein
the solid-like ionic liquid exists between the metal nanoparticles and the support.
